# EUROPEAN PATENT APPLICATION

(11) **EP 1 362 780 A2**
(43) Date of publication of application: **19.11.2003**
(21) Application number: 03010870.8
(22) Date of filing: 15.05.2003
(51) Int. Cl.: B62K 21/12

(54) **A handlebar for vehicles, particularly motorcycles**

(30) Priority: 16.05.2002 IT TO20020096 U
(71) Applicant: AG S.r.l., 10029 Villastellone (Torino) (IT)
(72) Inventor: Accossato, Giovanni, 10029 Villastellone (Torino) (IT)
(74) Representative: Fioravanti, Corrado

(57) **Abstract**

The handlebar (1) is bent (9-12) and worked so as to form a central, rectilinear tubular portion (2) of circular cross section having an outer diameter (D) and a wall thickness (S), and two rectilinear tubular outer end portions (3, 4) of circular cross section having central axes (b, c) not coinciding with the central axis (a) of the central portion (2). The outer diameter (d) of the end portions (3, 4) is less than that (D) of the central portion (2), and the wall thickness (s) of the end portions (3, 4) is less than that (S) of the central portion (2). Two intermediate tubular portions (5, 6) connect the central portion (2) to a respective end portion (3, 4). The bends (9, 10) formed between the central portion (2) and the intermediate portions (5, 6), and the bends (11, 12) formed between the intermediate portions (5, 6) and the end portions (3, 4) are formed by lengths of tube having the same outer diameter (D) and the same radial wall thickness (S) of the central tubular portion (2).

## Description

The present invention refers to a vehicle handlebar, particularly for motorcycles, of the type having the features defined in the preamble of Claim 1. Handlebars of this kind are known, for example, from US-5 950 497, DE-201 07 996, US-5 257 552, US-5 117 708 and DE-22 35 816.

The handlebars disclosed in the above mentioned patent publications generally have' two intermediate tubular sections of overall truncated cone shape joining a straight, central tubular portion of greater outer diameter and thickness, with a respective straight end section having smaller outer diameter and wall thickness with respect to those of the central portion.

The object of the present invention is to provide a handlebar of the type defined at the beginning, addressing mainly the problem of strengthening the bent zones, usually bent at obtuse angle, which constitute the weakest zones from a constructional point of view where the handlebar is likely to break or undergo unacceptable permanent deformation.

An other object of the present invention is to provide a handlebar of simple construction, which can be manufactured through a simplified process, allowing to avoid the formation of the conventional intermediate sections of truncated cone shape joining the central portion of the handlebar with its opposite end portions.

These and other object and advantages, which shall be better understood in the following, are attained in accordance with the present invention by a handlebar having the features defined in the appended claims.

There will now be described the constructional and functional features of a preferred but not limiting embodiment of a handlebar according to the invention. Reference is made to the accompanying drawings, in which:
figure 1 is a view of a handlebar according to invention, as it appears to the driver when mounted on a motorcycle;
figure 2 is a top plan view of a handlebar of figure 1;
figure 3 is a cross section of the handlebar taken along section lines III-III; and
figure 4 is a cross section of the handlebar taken along the section line IV-IV.

With reference to the drawings, a handlebar according to the present invention is indicated overall 1. The handlebar 1 is made starting from an initially straight tubular bar of constant circular cross section. The bar is then cut, bent, turned, and subjected to other operations, as described herein after.

The handlebar 1 has a central rectilinear portion 2 and two rectilinear end portions 3, 4. The central portion 2 is joined to the end portions 3, 4 through intermediate portions 5, 6, respectively. The central axes b and c of the end portions 3, 4 are preferably skew with respect to the central axis a of the central portion 2 of the handlebar. This arrangement is obtained by bending the handlebar at four bending points that, according to the invention, are formed by handlebar parts having the maximum resisting section. Owing to this arrangement, the risk of initiation of cracks in the bent areas, which constitute the weakest points of the handlebar, is reduced.

There will now be generally described the most significant steps of a method of manufacturing a handlebar according to the present invention.

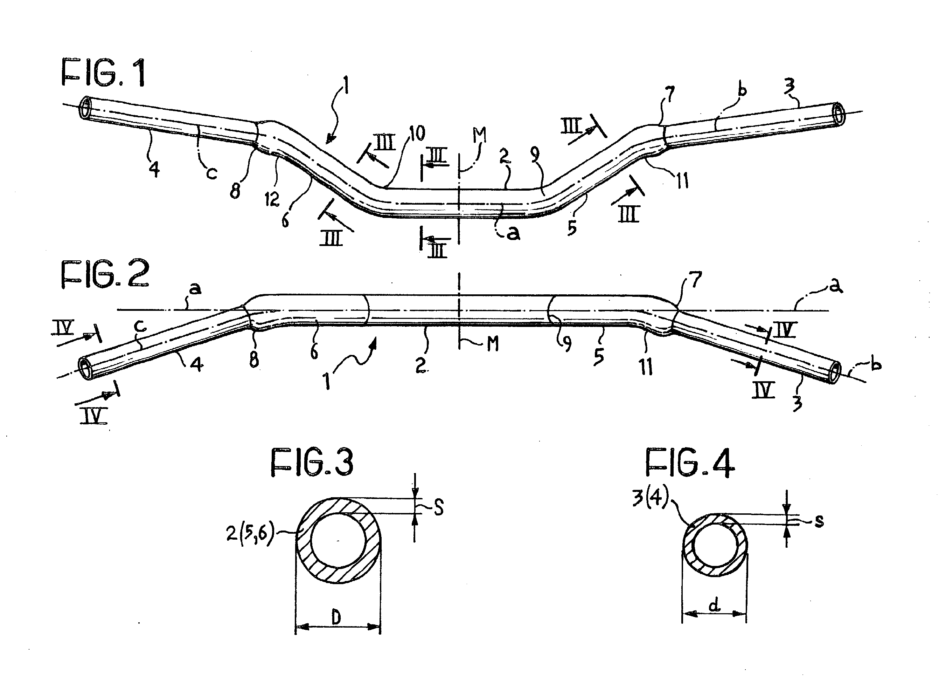

Starting from a rectilinear tubular bar cut into a suitable length and having a constant cross section as shown in figure 3, with an outer diameter D and radial wall thickness S, the end portions 3 and 4 are turned removing from the outside a layer of material, preferably but not exclusively an aluminium alloy, up to reaching the cross section shown in figure 4, where the handlebar as an outer diameter d and a radial wall thickness s. By way of indication, the central portion 2 and the intermediate portions 5, 6 have a diameter D of about 28 mm, with a radial wall thickness S of about 4 mm, and the end portion 3, 4 may have an outer diameter d of about 22 mm and a radial wall thickness s ranging between 3 and 3.5 mm.

The zones indicated 7, 8 which are adjacent to the proximal ends of the end portions 3, 4 are swaged from the outside in a radial direction so as to be radiused substantially uniformly with the remaining part of the handlebar, which has the original maximum transversal cross section. The handlebar is then bent forming a first bend 9 defining an obtuse angle between the central portion 2 and the intermediate portion 5. A second bend 11 is then formed in a slightly more central position with respect to the swaged zone 7, bending the end section 3 with respect to the joining portion 5 at an obtuse angle lying in a plane not coinciding with the plane in which the central axis a of central portion 2 lies. Then, the left portion of the handlebar is bent similarly as described as a reference to the right part, so as to obtain a handlebar having a central symmetry with respect to a plane M essentially perpendicularly to the central axis a of the central portion 2. The obtuse angle bend formed between the central portion 2 and the intermediate portion 6 is indicated 10, and the bend obtained in a slightly inner position with respect to the swaged portion 8, between the intermediate section 6 and the end section 4 is indicated 12.

Expect for the joining zones 7, 8, each of the tubular sections 2, 3, 4, 5 and 6 constituting the handlebar has preferably a substantially constant cross section.

The so formed handlebar is then tempered, brushed and finally coloured by dipping in a liquid bath.

As will be appreciated, in the handlebar according to the invention the bends are formed by parts having the maximum cross section and therefore the maximum moment of inertia, whereby structural yielding is less likely to occur with respect to know solutions wherein the bends are instead formed in lengths of the tube having a narrower or tapering section. The essentially tubular and rectilinear shape of the intermediate portions 5 and 6 simplifies considerably the manufacturing process with respect to conventional solutions having intermediate sections of elongated truncated cone shape. Finally, the swaging of the zones 7 and 8 causes a compaction in the radial direction, which stands in favour of the handlebar stiffness in these zones.

## Claims

1. A handlebar (1) for vehicles, particularly motorcycles, bent (9-12) and worked so as to form:
- a central, rectilinear tubular portion (2) of circular cross section having an outer diameter (D) and a wall thickness (S),
- two rectilinear tubular outer end portions (3, 4) of circular cross section, having central axes (b, c) not coinciding with the central axis (a) of the central portion (2), the outer diameter (d) of the end portions (3, 4) being less than that (D) of the central portion (2), and the wall thickness (s) of the end portions (3, 4) being less than that (S) of the central portion (2),
- two intermediate tubular portions (5, 6) each connecting the central portion (2) to a respective end portion (3, 4),
**characterised in that** the bends (9, 10) formed between the central portion (2) and the intermediate portions (5, 6), and the bends (11, 12) formed between the intermediate portions (5, 6) and the end portions (3, 4) are formed by lengths of tube having substantially the same outer diameter (D) and the same radial wall thickness (S) of the central tubular portion (2).

2. A handlebar according to claim 1, **characterised in that** the intermediate portions (5, 6) are formed by lengths of tube having substantially the same outer diameter (D) and the same wall thickness (S) of the central portion (2).

3. A handlebar according to claim 1, **characterised in that** each intermediate portion (5, 6) is joined to the respective proximal end of the end portions (3, 4) through a respective joining portion (7, 8) tapered by swaging and located outwardly with respect to the bends (11, 12) formed between the intermediate portions (5, 6) and the end portion (3, 4).

4. A handlebar according to claim 1, **characterised in that** each of the tubular portions (2-6) preferably has a substantially constant cross section.
